(19) Europäisches Patentamt
European Patent Office
Office européen des brevets

(11) **EP 4 465 257 A1**

(12) **EUROPEAN PATENT APPLICATION**

(43) Date of publication:
**20.11.2024 Bulletin 2024/47**

(21) Application number: **23174323.8**

(22) Date of filing: **19.05.2023**

(51) International Patent Classification (IPC):
*G06V 20/59* (2022.01)    *B60R 21/015* (2006.01)
*G06V 40/10* (2022.01)    *G06F 18/2413* (2023.01)
*G06V 10/25* (2022.01)    *G06V 10/20* (2022.01)
*G06V 10/26* (2022.01)    *G06F 18/25* (2023.01)
*G06V 10/80* (2022.01)    *B60R 21/01* (2006.01)

(52) Cooperative Patent Classification (CPC):
**G06V 20/597; B60R 21/01538; B60R 21/01552;
G06F 18/2413; G06F 18/254; G06V 10/25;
G06V 10/255; G06V 10/26; G06V 10/809;
G06V 40/103;** B60R 21/01544; B60R 2021/01034;
B60R 2021/01204; G06V 10/62

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Aptiv Technologies AG
8200 Schaffhausen (CH)**

(72) Inventors:
• **ZHANG, Xuebing**
 **42119 Wuppertal (DE)**
• **REHFELD, Timo**
 **51109 Köln (DE)**
• **OSAMA, Muhammad**
 **42105 Wuppertal (DE)**

(74) Representative: **Bardehle Pagenberg
Partnerschaft mbB
Patentanwälte Rechtsanwälte
Prinzregentenplatz 7
81675 München (DE)**

(54) **VEHICLE PASSENGER SAFETY BY HEIGHT ESTIMATION**

(57) A computerized method of controlling one or more vehicle safety measures by determining the height of a person sitting on a seat in a vehicle cabin is provided. The method comprises determining, based on one or more images showing the person on a vehicle seat, a height of the person by determining a set of body characteristics of the person, comparing the set of determined body characteristics with a corresponding set of reference characteristics, and determining the height of the person based on the comparison. The method further comprises outputting a control signal to the one or more vehicle safety measures based at least partially on the determined height.

Fig. 1

## Description

### FIELD

The present disclosure generally relates to safety improvements for vehicles and, in particular, to methods and systems of controlling vehicle safety measures by determining the height of a person in a vehicle.

### BACKGROUND

Smart vehicles, such as smart cars, smart busses, and the like, are on their way to significantly improve the safety of passengers. Such smart vehicles may be equipped with onboard cameras and may be capable of capturing images of the vehicle's interior. Those images can then be used, sometimes in combination with other sensors, for different safety related tasks.

Safety tasks in a vehicle relate to controlling safety measures, such as airbag or seatbelt deployment, door or windows locks and the like. In modern smart cars, these safety measures can be based on person detection and classification. Person detection and classification therefore plays an important role in future vehicles, for example, in seat occupancy detection. Seat occupancy detection is applied to determine whether or not a person is located on a seat. However, such a basic detection whether or not a person is located on a seat is not enough for reliably controlling all safety measures in a reliable way.

Hence, there is a need for an improved system for controlling of safety measures.

### SUMMARY

In this context, methods, systems and computer program products are presented as defined by the independent claims.

More specifically, a computerized method of controlling one or more vehicle safety measures by determining the height of a person sitting on a seat in a vehicle cabin is provided. The method comprises determining, based on one or more images showing the person on a vehicle seat, a height of the person by determining a set of body characteristics of the person, comparing the set of determined body characteristics with a corresponding set of reference characteristics, and determining the height of the person based on the comparison. The method further comprises outputting a control signal to the one or more vehicle safety measures based at least partially on the determined height.

In embodiments, the set of reference characteristics are stored in a database, wherein the database may be a local database of the vehicle or a remote database to the vehicle. In some embodiments, the one or more vehicle safety measures comprise airbag deployment, seat belt control, and/or door locks.

In embodiments, determining the set of body characteristics is based on bounding boxes and comprises determining, based on the one or more images, a first bounding box for the seat, and determining, based on the one or more images, a second bounding box for the person. In further embodiments, the set of body characteristics comprises a sitting height of the person, wherein the sitting height is determined based a difference between a height of the first bounding box and a height of the second bounding box. In yet further embodiments, the difference is determined as number of pixels in the one or more images, wherein determining the set of body characteristics further comprises converting the number of pixels to a metric unit according to the height of the first bounding box.

In embodiments, determining the set of body characteristics is based on body key points and comprises determining, based on the one or more images, a plurality of body key points. In further embodiments, the set of body characteristics comprises at least one length of a body part, wherein the length of a body part is determined based on a difference between a pixel coordinate of a first body key point and a pixel coordinate of a second body key point. In yet further embodiment, the at least one length of a body part comprises at least one of a torso height, a shoulder width, a hip width, an upper arm length, a lower arm length, and a leg length.

In embodiments, reference characteristics in the set of reference characteristics are associated with ages of persons. In further embodiment, the method further comprises determining, based on the one or more images, a probability histogram according to the determined set of body characteristics.

In embodiments, determination of the set of body characteristics is based on bounding boxes and body key points and the method further comprises determining a first height of the person based on bounding boxes, determining a second height based on body key points, and fusing the first height and the second height to determine the height of the person.

Another aspect concerns a system of controlling one or more vehicle safety measures, the system implementing the methods as described herein.

A further aspect concerns a vehicle comprising a camera for capturing one or more images, and the system for controlling one or more vehicle safety measures as described herein.

A final aspect concerns a computer program product comprising instructions, which, when executed on a computer, cause the computer to perform the methods as described herein.

These and other objects, embodiments and advantages will become readily apparent to those skilled in the art from the following detailed description of the embodiments having reference to the attached figures, the disclosure not being limited to any particular embodiments.

## BRIEF DESCRIPTION OF THE DRAWINGS

The foregoing and further objects, features and advantages of the present subject matter will become apparent from the following description of exemplary embodiments with reference to the accompanying drawings, wherein like numerals are used to represent like elements, in which:

Fig. 1 is a high-level flow-chart of a method for controlling one or more vehicle safety measures according to the disclosure.

Fig. 2 shows bounding boxes in an image of a person in a vehicle cabin.

Fig. 3A depicts a person's skeleton based on body key points in an image of a person in a vehicle cabin. Fig. 3B illustrates a camera view on the person's key points and possible joints formed by the person's body key points.

Fig. 4 is an example of back projection into the camera plane for determining a unit to pixel relation with respect to a torso height a person.

Fig. 5 is an example of back projection into the camera plane for determining a unit to pixel relation with respect to a shoulder width of a person.

Fig. 6 illustrates a possible look-up table according to the disclosure.

Fig. 7 presents an evolvement of histograms for determining the height of a passenger.

Fig. 8 shows an example of modules implemented in a system for controlling one or more vehicle safety measures according to embodiments of the disclosure.

Fig. 9 presents an interior of a vehicle with possible positions of cameras.

Fig. 10 is diagrammatic representation of a computing system implementing the functionalities described herein.

## DETAILED DESCRIPTION

The present disclosure relates to methods and systems for controlling vehicle safety measures by determining the height of a person. Detection of persons in a vehicle already plays an important role for ensuring safety. However, it may be often not enough to only detect whether a person in sitting in a vehicle, but further information relating to the person may be of relevance for safety and control function of the vehicle, too.

For example, the age of a detected person may be relevant to distinguish a child from an adult. If a child up to a specific age is detected, airbag deployment may be controlled such that the airbag is completely suppressed to protect the child. For older children, the airbag deployment may be controlled such that the airbag is allowed to inflate but only with a reduced pressure. Other examples of safety measures that may be deployed differently depending on the height and/or age of a person are, e.g., seatbelts, door locks, and the like. Safety measure control may also be a regulatory requirement by law, e.g., US regulation FMVSS208. Hence, it may be required to reliably differentiate children from adults (e.g., by age and/or by height), in order to be compliant with regulatory requirements.

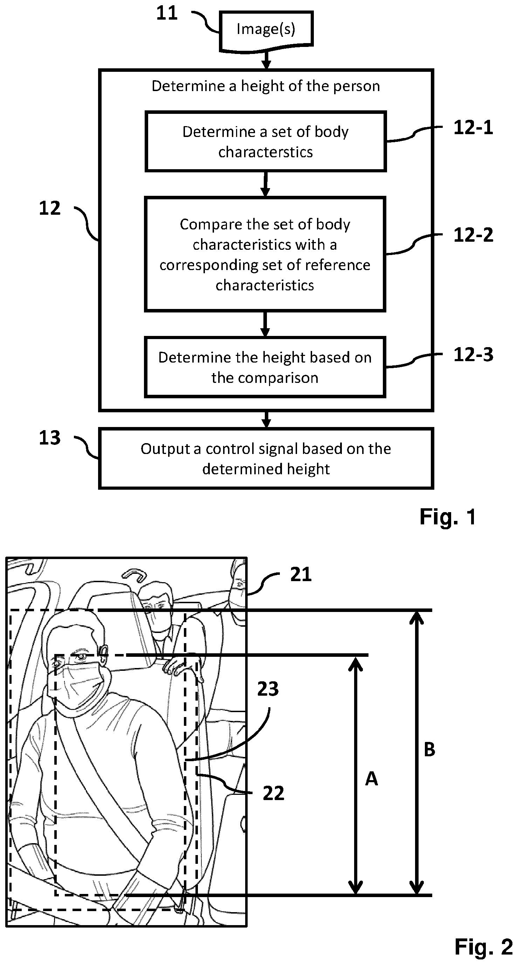

This disclosure presents a solution for safety measure control based on existing information available in a vehicle, which allows an estimation of the height of the passengers sitting in a vehicle, for which a high-level flow-chart is presented in Fig. 1.

The method of controlling one or more vehicle safety measures by determining the height of a person sitting on a seat in a vehicle cabin presented in Fig. 1 is based on one or more images 11. The one or more images 11 show the person sitting on a vehicle seat. The images 11 may be taken by one or more on-board cameras of the vehicle.

Modern vehicles, in particular, cars, can be equipped with one or more cameras. These cameras, which may comprise one or more of color or black/which cameras, infrared cameras, depth cameras, and heat cameras, provide images 11 of the vehicle's interior to internal components of the vehicle. The images 11 may be taken in response to a triggering event, e.g., opening a door, interacting with a multi-media system of the vehicle, using a voice command, or the like, or at defined periodic or non-periodic time intervals. The images 11 taken may then be used by a plurality of internal systems for controlling safety means as herein described but also for entertainment and comfort use cases.

Images 11 of the vehicle's interior may comprise full images showing the whole interior. Alternatively, the images 11 may depict only a partly region of the interior, e.g., one front seat, one or more rear seats, a door region, and such. If a camera captures the whole interior, the images 11 may be preprocessed image crops that have been extracted from one or more raw images for one or more regions in the vehicle.

Based on the images 11, a height of the person on the images 11 is determined in box 12. Finally, based at least partially on the determined height of the person, a control signal is output to one or more vehicle safety measures, which is shown in box 13. Vehicle safety measures may comprise airbag deployment, seat belt control, and/or door locks. A control signal may lead to an airbag being deployed normally, with reduced pressure or deactivated. A control signal may also or alternatively lead to a seat belt being deployed normally or with softened force. A control signal may also or alternatively lead to a door being locked.

The height of the person may not directly be determined from the images 11 as only parts of the person are typically present in the images 11. For example, the lower legs will not be detectable on the images 11 when the person is sitting. Moreover, other body parts may be obstructed by the vehicle's interior components, too. Hence, the method presents herein does not directly determine the height of the person but starts with determining a set of body characteristics of the person in box 12-1.

Such body characteristics may be a sitting height, e.g., the distance between the hips to the apex of the head, a torso height, e.g., the distance between the hips and the shoulders, a shoulder width, e.g., the distance between the right shoulder joint and the left shoulder joint, a hip width, e.g., the distance between the right hip joint and the left hip joint, an upper arm length, a lower arm length, an upper leg length, a lower leg length, and the like.

In some embodiments, the body characteristics may be determined based on bounding boxes determined on the images 11. For example, a first bounding box may be generated for the seat and a second bounding box may be generated for the person. Bounding boxes may be generated by an object detection algorithm. The object detection algorithm may be a machine learning algorithm trained on example images. The machine learning algorithm may be based on a machine learning method like a gradient boosted tree, a random forest, an artificial neural network, a recurrent neural network, a convolutional neural network, an autoencoder, a deep learning architecture, a support vector machine, a data-driven trainable regression model, a k-nearest-neighbor classifier, a physical model, and/or a decision tree, or a combination thereof. The machine learning algorithm for generating the bounding boxes may be trained remotely before use of the vehicle and applied during use of the vehicle. The machine learning algorithm may also be retrained during use of the vehicle. Use of the vehicle is to be understood as anything that activates the power supply in the vehicle, i.e., unlocking the doors, approaching the vehicle with the key/token for keyless entry systems, driving the vehicle, and the like.

In some examples, the bounding box for the seat may be predefined as starting on the left upper corner with the seat belt outlet and ending on the right lower corner with the seat belt buckle. The coordinates of these anchor points may be predefined, e.g., stored in an on-board database, but may also be determined on the images 11. Since the real height of the vehicle backrest is known and the seat bounding box configuration with its anchor points is assumed to be correct and precise, the seat bounding box of the seat serves as reference for determining the body characteristics.

In examples, in which the set of characteristics is determined based on bounding boxes, the set of body characteristics may comprise a sitting height of the person. The sitting height of the person may then be determined based on a difference between a height of the first bounding box relating to the seat and a height of the second bounding box relating to the person. In such examples, the difference between the bounding boxes may be determined as a number of pixels in the one or more images 11 of the vehicle's interior. The number of pixels may then be converted to a metric unit according to the height of the first bounding box. This is possible since the real height of the backrest of the seat, which corresponds to the height of the first bounding box, is known as explained above.

Additionally or alternatively, the set of body characteristics may be determined based on body key points. In such example, a plurality of body key points of the person is determined based on the one or more images 11. In such an example, the length of a body part may be determined based on a difference between a pixel coordinate of a first body key point and a pixel coordinate of a second body key point. The set of body characteristics may then comprise at least one length of a body part, e.g., a torso height, a shoulder width, a hip width, an upper arm length, a lower arm length, an upper leg length, a lower leg length, and the like.

The body key points may be provided by a key point detector, which may be based on machine learning techniques and which is applied on the one or more images 11. The key point detector may detect several body key points for a passenger. For example, the key point detector may detect key points for shoulders, hips, elbows, wrists, knees, and the like, of passengers in the vehicle. These body key points may be classified and comprise the respective pixel values of a set of body key points for a passenger.

When the set of body characteristics has been determined, this is compared with a corresponding set of reference characteristics in box 12-2. The set of reference characteristics may be stored in an on-board memory of the vehicle or retrieved from a remote cloud database. Based on the comparison, the height of the person may be determined as shown in box 12-3. In some examples, determining a probability histogram relating to a height estimation according to the determined set of body characteristics and the set of reference characteristics for determining the height of the person may be beneficial. The probability histogram may also evolve over multiple time frames and images 11.

For example, a set of reference characteristics may be a function or a table associating ranges of sitting heights with total body heights of persons. Hence, a determined sitting height may be compared with the result of the function or the table and a resulting height of the passenger may be determined based on the comparison. In another example, the set of reference characteristics may refer to a plurality of tables or datasets that associate a plurality of body characteristics, such as the sitting height, the torso height, the shoulder width, the hip width, the upper arm length, the lower arm length, the upper leg length, the lower leg length etc. with heights of persons.

In some examples, the set of reference characteristics may also be associated with ages of persons. In such examples, the method may not only determine a height of a person but also a likely age of the person, which may also be relevant to the outputting of the control signal. Since the heights of persons of a specific age (up to the age when being grown up, e.g., 16, 18 or 20) may vary a lot, it may be specifically advantageous in such cases to determine a probability histogram relating to age estimation according to the determined set of body characteristics and the set of reference characteristics.

In some embodiments, the determination of the set of body characteristics may be based on bounding boxes and body key points, i.e., both approaches may be implemented in one system. In such examples, the method may further comprise determining a first height of the person based on bounding boxes and determining a second height based on body key points. If both height estimations are available, the method may further comprise fusing the first height and the second height to determine the height of the person. Fusing may comprise averaging the first and second heights to for the finally determined height of the person, prioritizing the first or the second height over the other, forming a weighting average or the like. Additionally or alternatively, if one of the two height estimations is not available, e.g., because an image does not show enough details for one or the other method, the height may be determined on the remaining one, e.g., only based on bounding boxes,

Fig. 2 shows bounding boxes in an image 21 of a person in a vehicle cabin. The image 21 may be one of the images 11 of Fig. 1. The image 21 may be a preprocessed to focus on the co-driver's seat or any other seat in the vehicle. As will be apparent to the skilled person, the method can be applied to any seat, even to the driver's seat, e.g., if safety measures are associated with the height of a person sitting on a vehicle's seat. An algorithm to determine two bounding boxes may be applied, namely, one first bounding box 22 relating to the seat and one second bounding box 23 relating to the person's sitting height.

In some examples, the first bounding box 22 for the seat may be predefined as starting on the left upper corner with the seat belt outlet and ending on the right lower corner with the seat belt buckle. The coordinates of these anchor points may be predefined, e.g., stored in an on-board database, but may also be determined on the image 21. Since the real height of the vehicle backrest is known and the seat bounding box configuration with its anchor points is assumed to be correct and precise, the seat bounding box 22 of the seat serves as reference for determining the body characteristics.

The heights A, B of both bounding boxes 22, 23 can then be extracted as a number of pixels and the height of the person can be determined. For example, the real (base config) height of the seat may be known and denoted in the following as BH. Assume BH is 80 cm. The sitting height (denoted in the following as SH) can be calculated relative to base config height as follows:

$$SH = \frac{B}{A} \cdot BH$$

With a growth chart look-up-table or a tuned function, the sitting height (SH) may be mapped to the full height (FH) or even to the age of a person. In some embodiments, a filter can be added to smooth the result. The following exemplary functions may be applied for 2-17 years old persons:

$$FH = \frac{SH}{0.53}$$

$$SH = 2.7 \cdot age + 47$$

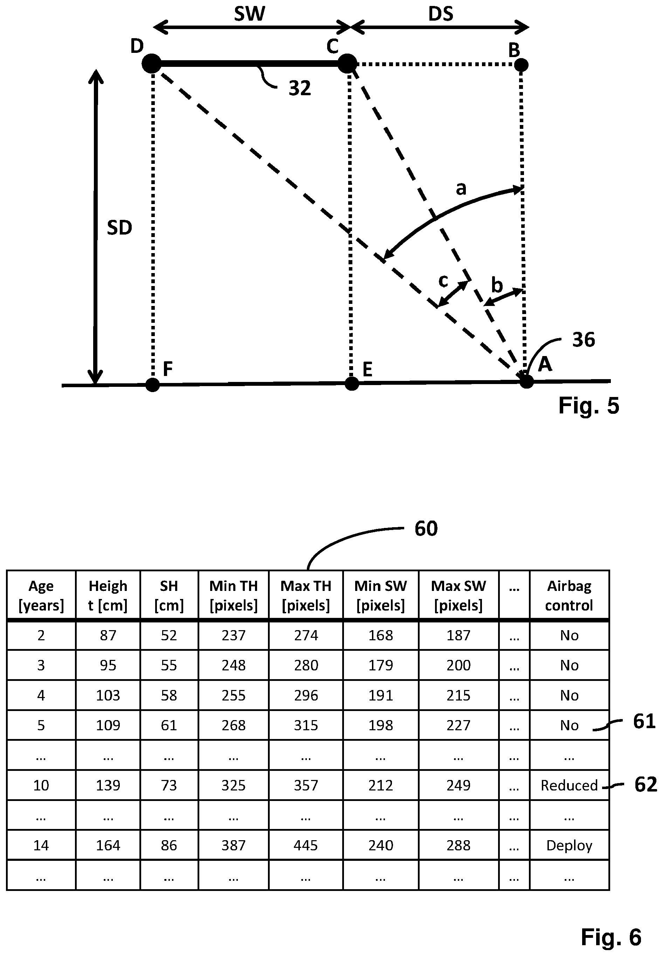

Alternatively, a look-up table associating sitting heights with full heights and/or ages can be consulted to determine the height or the age of the person. Such look-up table will be discussed later with respect to Fig. 6.

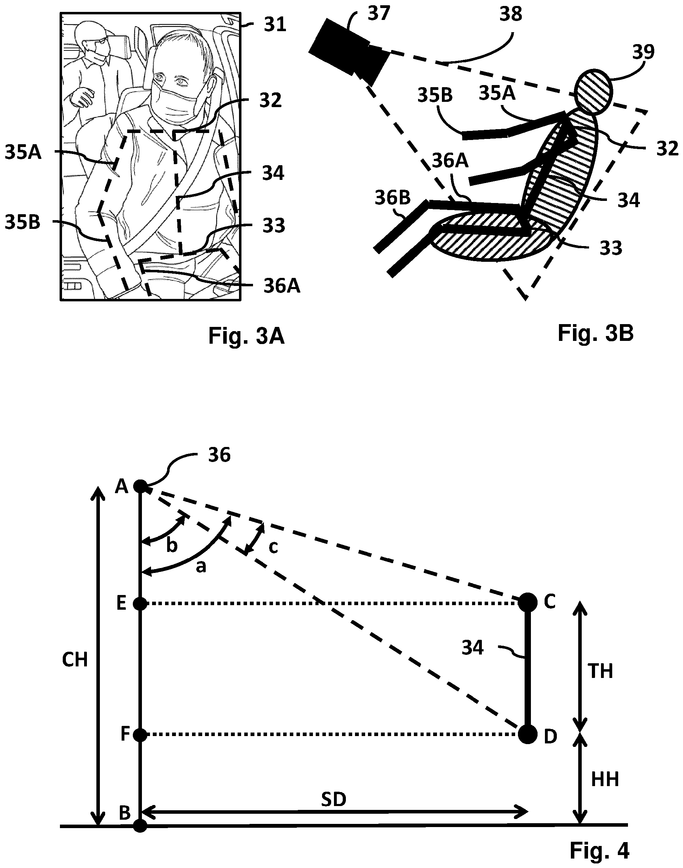

In addition or alternatively to the determination of heights or ages of persons based on bounding boxes, the heights or ages may also be determined based on body key points, which is depicted in Figs. 3A and 3B. Fig. 3A depicts a person's skeleton based on body key points in an image 31, e.g., one of the images 11, of a person in a vehicle cabin. The image 31 may be a preprocessed to focus on only the co-driver's seat or any other seat in the vehicle. As will be apparent to the skilled person, the method can be applied to any seat, even to the driver's seat, e.g., if safety measures are associated with the height of a person sitting on a vehicle's seat.

A key point detector may detect key points for shoulders, hips, elbows, wrists, knees, and the like, of passengers in the vehicle. These body key points may be classified (e.g., as shoulder right key point, hip left key point etc.) and comprise the respective pixel values of a set of body key points. For example, the key point detector may detect both shoulder body key points and thereby the connecting line relating to the shoulder width 32 is formed. The process is the same for the hip width 33, the torso height 34, the upper arm length 35A, the lower arm length 35B, and the upper leg length 36A. More body key points can be detected so that the method may also determine a lower leg length or the like.

Fig. 3B illustrates a camera view on the person's key points and possible joints formed by the person's body key points. As can be seen in this example, camera 37 is located above the passenger and has only a limited view 38 on the passenger, who sits on the vehicle seat 39. The shoulder width 32, the hip width 33, the torso height 34, the upper arm length 35A, the lower arm length 35B, the upper leg length 36A and the lower leg length 36B of the passenger's joints are also shown although not all can be determined based on the image 31.

The body key points provide the location of the joints in pixel coordinates. These coordinates can in turn be used to calculate the length of different body parts in units of pixels, e.g., torso height 34 (TH), shoulder width 32 (SW), hip width 33 (HW), and the like. When a length of a body part in units of pixels is known, the possible full height in centimeters (cm) can be determined.

For example, assume a measured torso height 34 being 100 pixels. It may have been determined before that persons with 100 pixels torso height on the image 31 may have a full height in the range of [85, 90, 110, 125] cm. If additionally, the hip width 33 is measured to be 50 pixels, which correspond the full height range [80, 90, 105, 108] cm, and the shoulder width 32 is measured to have 75 pixels, which correspond to the full height range of [90, 120, 130] cm, the predicted height would be 90 cm as all three ranges comprise this height.

The ranges may be determined for a particular vehicle based on the geometry, the person's position, the camera position, the possible movement of the seat (back, forth, up, and down), cabin dimensions, and the like. This enables to back project what could be the smallest and largest length of different body parts on units of pixels as captured by the camera. In that manner, a table may be formed, such as the table that is later discussed with respect to Fig. 6.

Fig. 4 is an example of back projection into the camera plane for determining a unit to pixel relation with respect to a torso height (TH) 34 a person. The camera 36 at point A is located at a camera height (CH) measured from a base line of the vehicle in cm. The seat is located at a seat distance (SD) measured from the horizontal reference point B of the camera 36 in cm and in a seat height (HH) measured from the base line of the vehicle in cm. Point C is the shoulder point of the person. Hip point D is assumed to be associated with the seat height. Points E and F are the horizontal reference points to points C and D.

The person is assumed to have a torso height of TH in cm. In order to back project this height into the camera, the angle c is determined, which is given as c = a - b. Consider the right-angled triangle formed by vertices A, D, and F. The formula for the angle b is:

$$b = \tan^{-1}\left(\frac{SD}{CH - HH}\right)$$

Similarly, consider the right-angled triangle formed by vertices A, C, and E. The formula for the angle a is:

$$a = \tan^{-1}\left(\frac{SD}{CH - (TH + HH)}\right)$$

Then, the angle c can be determined as mentioned above by c = a - b. With the property 'pixel per degree' (PPD) of the camera 36, the torso height can be determined in units of pixels as:

$$TH \ (in \ pixels) = PPD \cdot c$$

To accommodate for the movement of the seat backwards, forwards, upwards and downwards, the minimum and maximum horizontal distances (SD) and the minimum and maximum seat height (HH) can be plugged-in in the above equations. This in turn provides a limit of TH in units of pixels for a given TH in units of cm. This way a table for TH, e.g., the one discussed later with respect to Fig. 6, with minimum and maximum pixels values can be constructed.

Fig. 5 is an example of back projection into the camera plane for determining a unit to pixel relation with respect to a shoulder width (SW) 32 of a person. The camera 36 at point A is located at a horizontal distance to the shoulder (DS) measured from a base line of the vehicle in cm. The seat is located at a seat distance (SD) measured from the horizontal reference point A of the camera 36 in cm and in a seat height (HH) measured from the base line of the vehicle in cm. Shoulder points C and D are set as such point D is assumed to be at the distance DS (e.g., according to a seat position) to the camera. Points E and F are the vertical reference points to points C and D.

The person is assumed to have a shoulder width of SW in cm. In order to back project this width into the camera, the angle c is determined, which is given as c = a - b. Consider the right-angled triangle formed by vertices A, B, and C. The formula for the angle b is:

$$b = \tan^{-1}\left(\frac{DS}{SD}\right)$$

Similarly, consider the right-angled triangle formed by vertices A, B, and D. The formula for the angle a is:

$$a = \tan^{-1}\left(\frac{DS + SW}{SD}\right)$$

Then, the angle c can be determined as mentioned above by c = a - b. With the property 'pixel per degree' (PPD) of the camera 36, the shoulder width can be determined in units of pixels as:

$$SW\ (in\ pixels) = PPD \cdot c$$

In other examples, a rotation angle d of the shoulder can be considered, too. Then, formula b may be changed to:

$$b = \tan^{-1}\left(\frac{DS}{SD - SW \cdot \sin d}\right)$$

A variation of the horizontal distance D (due to movement of seat back and forth) and, in some examples, of the rotation of shoulder by angle d, e.g., 0-5 degrees, gives minimum and maximum values for SW in units of pixels which constructs the look-up table for shoulder width, such as shown in the following Fig. 6.

Similar geometries and mathematical calculations as above can be used for back projection of other body parts such as hip width (HW), upper arm length, upper leg length, and the like. This results in multiple body part length ranges in pixels for one full height, which may be stored in one or multiple look-up tables.

Fig. 6 illustrates a possible look-up table 60 according to the disclosure. The table 60 comprises as columns 'Age', 'Height', 'SH', 'Min TH', 'Max TH', 'Min SW, 'Max SW and 'Airbag control'. More columns are possible, too, e.g., for other safety measures or other measured body parts. In the example, the age is given in number of years and the full body height ('Height') as well as the sitting height ('SH') are given in cm. The columns for the minimum and maximum torso heights ('TH'), shoulder widths ('SW'), and the like, list values in number of pixels. The final column 'Airbag control' indicates whether and how the airbag is deployed.

In the simplest form, such a look-up table may also only comprise a 'Height' column and an 'SH' column for a sitting height, or only a 'Height' column and a 'Min TH' and 'Max TH' column for a minimum and maximum torso height. The column 'Age' may be present or not depending on whether the control signal shall be based (also) on an age of the person.

The look-up table 60 of Fig. 6 may have been determined as described before or pre-defined for the vehicle and camera model. The column 'Airbag' may indicate whether and how the airbag is deployed. For example, if a sitting height of 62 cm is determined but no other body parts, then, the height of the person is determined to be approximately 109 cm. Additionally, it may also be determined that the person is approximately 5 years old, which results in no deployment of the airbag for this passenger (see line 61 of table 60).

In another example, it may be determined that the TH is 350 pixels and the SW is 220 pixels but no sitting height may be determined. The resulting estimated height is then 139 cm corresponding to an age of 10 years. In this example, the airbag would be deployed with reduced pressure as is shown in line 62 of table 60. However, determined body characteristics may differ from image to image, may lay in between two ranges, and the determination may be uncertain. For example, if a TH is determined to be 260 pixels and a SW is determined to be 192 pixels, which height is more likely, 95 or 103? Therefore, it may be advantageous to generate histograms over the one or more images 11 to get a more reliable vote for one height or age.

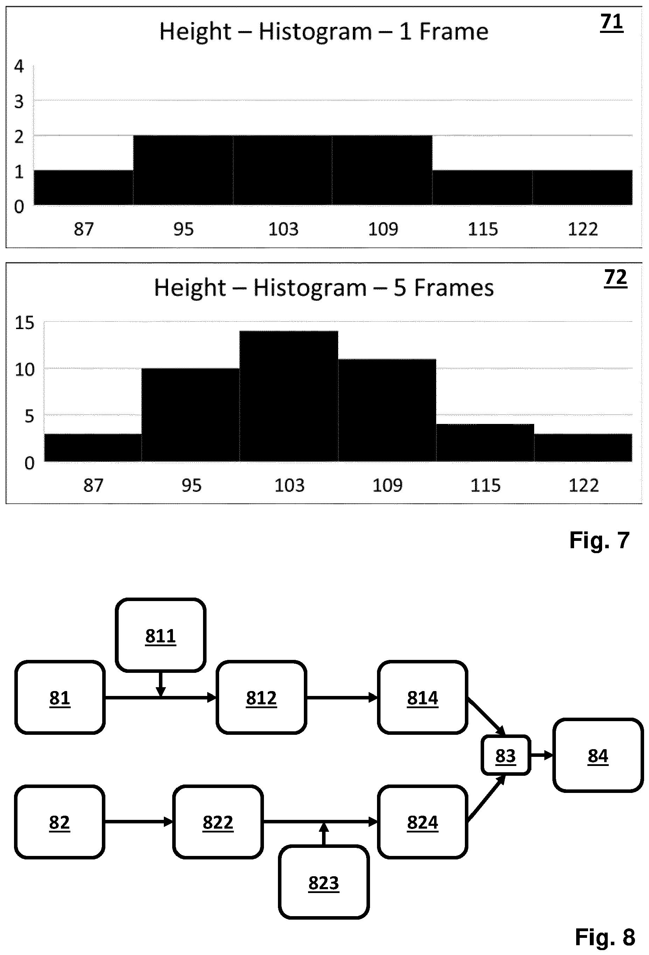

Fig. 7 presents such an evolvement of histograms for determining the height of a passenger. Possible heights that correspond to the measured body characteristics are accumulated over multiple image frames and the peak in the histogram is used as final determined height. It is noted that a similar histogram for ages can be made as well. In such a histogram, possible ages of all features are then accumulated in an age histogram and the peak in that histogram is used as final estimated age. The histogram (irrespective of whether it relates to height or age) grows over time or multiple frames to get a robust estimate even if the person is temporarily out of position and some body characteristics cannot be determined well.

The histograms of Fig. 7 show a histogram of one frame 71 and a histogram of 5 frames. In the histogram 71, it may be assumed that the SW in pixels could belong to any of the heights [87, 95, 103], the TW in pixels could belong to any of the heights [109, 115, 122], and the HW could belong to any of the heights [95, 103, 109]. In this example, it is still uncertain, which height the person has as three heights, namely, 95, 103, and 109 have the same number of votes. In the histogram 72, the determined body characteristics of five frames show a better estimation. Now, the most likely height is 103 cm, which can be more reliably chosen and determined.

Fig. 8 shows an example of modules implemented in a system for controlling one or more vehicle safety measures according to embodiments of the disclosure. An object detector 81 may provide bounding boxes for a seat and a person in a car. In 811, the seat base config may be retrieved, e.g., the real height of the seat backrest. Based on the two bounding boxes the sitting height of the passenger may be determined. A look-up table 812 may be consulted to determine the height 814 of the passenger according to the first path.

A body key point module 82 may provide body key points for a person in a car. A look-up table 822 may be consulted to determine a possible height of the passenger. Look-up tables 812 and 822 may be the same look-up table or different look-up tables. In some embodiments, a histogram 823, e.g., similar to that discussed with respect to Fig. 7, may help to determine the height 824 of the passenger according to the second path. Although not shown in Fig. 8, a histogram for determining the height according to the first path may also be used in a similar manner.

Both results, i.e., the heights 814 and 824 may be averaged in module 83. In other words, if the information of object detection and body key points is both available, the system will determine the height separately and only afterwards average the two determinations. Of course, if only one information is available, e.g. if the body key point module 82 does not provide enough information to let the system calculate the height, the system will take one height estimation and output as the final result. In addition, based on the statistical analysis of the accuracy of the two methods, a weight parameter may be imported for averaging giving one estimation more weight. Moreover, in some embodiments, if the height in the first path and in the second path is determined based on a histogram, module 83 may also fuse the two histograms to determine a final result 84.

Finally, the result 84, e.g., the final determined height, is used for outputting a control signal to a safety measure in the vehicle. Vehicle safety measures may comprise airbag deployment, seat belt control, and/or door locks. A control signal may lead to an airbag being deployed normally, with reduced pressure or deactivated. A control signal may also or alternatively lead to a seat belt being deployed normally or with softened force. A control signal may also or alternatively lead to a door being locked.

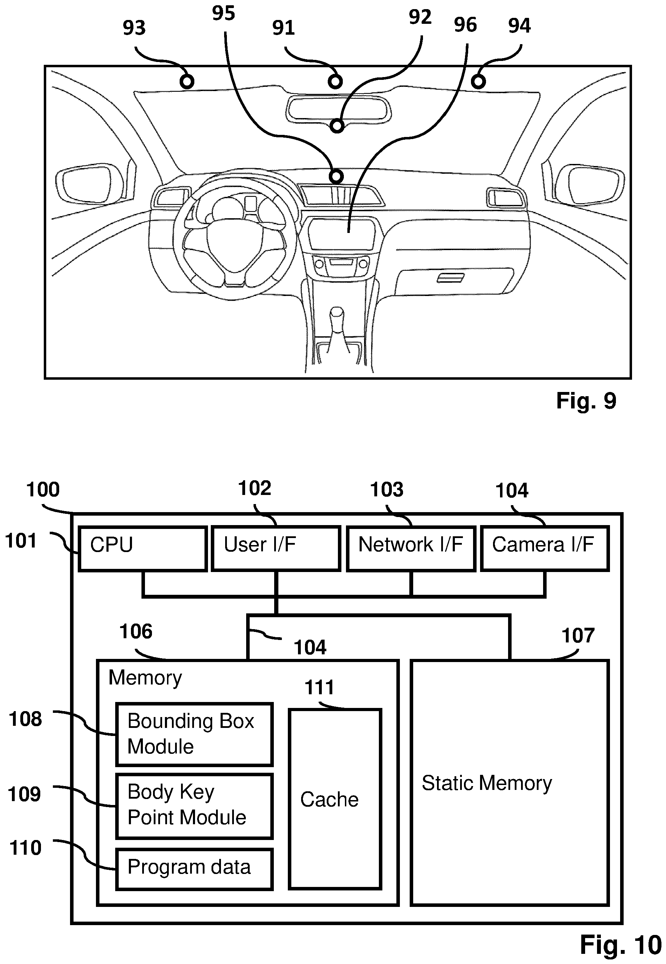

Fig. 9 presents an interior of a vehicle with possible positions of cameras and a main display that may be used for capturing one or more images used for controlling one or more vehicle safety measures according to embodiments described herein.

The vehicle may only comprise one camera but also a plurality of cameras at different positions. The cameras, which may be color or black/which cameras, infrared cameras, depth cameras, heat cameras, or a combination thereof, can be placed, e.g., in the middle over the front windshield and even over the rearview mirror as illustrated with position 91. Additionally or alternatively, the or another camera can be located below the rearview mirror as illustrated with position 92. If one camera is located at position 93, another one will usually also be located at position 94 but this is not mandatory. With two cameras a depth image or 3D image may be created. Additionally or alternatively, the or another camera can be located the dashboard or in the middle console as depicted with position 95. Each of the positions 91 to 95 may also comprise two cameras co-located for enabling a 3D view of the interior of the vehicle.

Cameras may capture images, e.g., at regular time intervals or if trigged by an application that requires to determine a passenger's height or age as described herein. The applications using the images may be executed on the onboard computing system or at least in part executed remotely, e.g., in the cloud. The result of the application may not only output a control signal to a safety measure but also trigger a display on a vehicle's main display 96 at the middle console. The vehicle's main display may also be located in another position, e.g., at the dashboard behind the steering wheel.

Fig. 10 is a diagrammatic representation of internal components of a computing system 100 implementing the functionality as described herein. The computing system 100 may be located in the vehicle and includes at least one processor 101, a user interface 102, a network interface 103 and a main memory 106, that communicate with each other via a bus 105. Optionally, the computing system 100 may further include a static memory 107 and a disk-drive unit (not shown) that also communicate with each via the bus 105. A video display, an alpha-numeric input device and a cursor control device may be provided as examples of user interface 102.

Furthermore, the computing system 100 may also comprise a specified camera interface 104 to communicate with an onboard camera of the vehicle. Alternatively, the computing system 100 may communicate with the camera via the network interface 103. The camera is used for taking the image. The computing system 100 may also be connected to database systems (not shown) via the network interface, wherein the database systems store at least part of the images needed for providing the functionalities described herein.

The main memory 106 may be a random-access memory (RAM) and/or any further volatile memory. The main memory 106 may store program code for a bounding box module 108 and for a body key point module 109, which implement the methods described herein. Other modules needed for further functionalities described herein may be stored in the memory 106. The memory 106 may also store additional program data 110 required for providing the functionalities described herein. Part of the program data 110, the bounding box module 108 and/or for the body key point module 109 may also be stored in a separate, e.g., cloud memory and executed at least in part remotely. In an exemplary embodiment, the memory 106 may store data about the determined child seat model type saccording to the methods describes herein in a cache 111.

According to an aspect, a vehicle is provided. The herein described methods may be stored as program codes 108, 109, or 110 and may be at least in part comprised by the vehicle. Parts of the program codes 108, 109, or 110 may also be stored and executed on a cloud server to reduce the computational effort on the vehicle's computing system 100. The vehicle may also comprise one or more cameras, e.g., connected via the camera interface 104, for capturing one or more images.

According to an aspect, a computer program comprising instructions is provided. These instructions, when the program is executed by a computer, cause the computer to carry out the methods described herein. The program code embodied in any of the systems described herein is capable of being individually or collectively distributed as a program product in a variety of different forms. In particular, the program code may be distributed using a computer readable storage medium having computer readable program instructions thereon for causing a processor to carry out aspects of the embodiments described herein.

Computer readable storage media, which are inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer.

A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

It should be appreciated that while particular embodiments and variations have been described herein, further modifications and alternatives will be apparent to persons skilled in the relevant arts. In particular, the examples are offered by way of illustrating the principles, and to provide a number of specific methods and arrangements for putting those principles into effect.

In certain embodiments, the functions and/or acts specified in the flowcharts, sequence diagrams, and/or block diagrams may be re-ordered, processed serially, and/or processed concurrently without departing from the scope of the disclosure. Moreover, any of the flowcharts, sequence diagrams, and/or block diagrams may include more or fewer blocks than those illustrated consistent with embodiments of the disclosure.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include", "having", "has", "with", "comprised of", or variants thereof are used in either the detailed description or the claims, such terms are intended to be inclusive in a manner similar to the term "comprising".

While a description of various embodiments has illustrated the method and while these embodiments have been described in considerable detail, it is not the intention of the applicants to restrict or in any way limit the scope of the appended claims to such detail. Additional advantages and modifications will readily appear to those skilled in the art. The disclosure in its broader aspects is therefore not limited to the specific details, representative apparatus and method, and illustrative examples shown and described. Accordingly, the described embodiments should be understood as being provided by way of example, for the purpose of teaching the general features and principles, but should not be understood as limiting the scope, which is as defined in the appended claims.

## Claims

1. A computerized method of controlling one or more vehicle safety measures by determining the height of a person sitting on a seat in a vehicle cabin, comprising:

   - determining, based on one or more images showing the person on a vehicle seat, a height of the person by:

     ▪ determining a set of body characteristics of the person;
     ▪ comparing the set of determined body characteristics with a corresponding set of reference characteristics; and
     ▪ determining the height of the person based on the comparison; and

   - outputting a control signal to the one or more vehicle safety measures based at least partially on the determined height.

2. The method according to claim 1, wherein the set of reference characteristics are stored in a database, wherein the database may be a local database of the vehicle or a remote database to the vehicle.

3. The method according to any one of the preceding claims, wherein the one or more vehicle safety measures comprise airbag deployment, seat belt control, and/or door locks.

4. The method according to any of the preceding claims, wherein determining the set of body characteristics is based on bounding boxes and comprises:

   - determining, based on the one or more images, a first bounding box for the seat; and
   - determining, based on the one or more images, a second bounding box for the person.

5. The method according to claim 4, wherein the set of body characteristics comprises a sitting height of the person, wherein the sitting height is determined based a difference between a height of the first bounding box and a height of the second bounding box.

6. The method according to claim 5, wherein the difference is determined as number of pixels in the one or more images, wherein determining the set of body characteristics further comprises converting the number of pixels to a metric unit according to the height of the first bounding box.

7. The method according to any one of the preceding claims, wherein determining the set of body characteristics is based on body key points and comprises determining, based on the one or more images, a plurality of body key points.

8. The method according to claim 7, wherein the set of body characteristics comprises at least one length of a body part, wherein the length of a body part is determined based on a difference between a pixel coordinate of a first body key point and a pixel coordinate of a second body key point.

9. The method according to claim 8, wherein the at least one length of a body part comprises at least one of a torso height, a shoulder width, a hip width, an upper arm length, a lower arm length, and a leg length.

10. The method according to any one of the preceding claims, wherein reference characteristics in the set of reference characteristics are associated with ages of persons.

11. The method according to claim 10 further comprising:

    - determining, based on the one or more images, a probability histogram according to the determined set of body characteristics.

12. The method according to any one of the preceding claims, wherein the determination of the set of body characteristics is based on bounding boxes and body key points, the method further comprising:

    - determining a first height of the person based on bounding boxes;
    - determining a second height based on body key points; and
    - fusing the first height and the second height to determine the height of the person.

13. A system for controlling one or more vehicle safety measures, the system implementing the method of any one of the preceding claims.

14. A vehicle, comprising:

    - a camera for capturing one or more images; and
    - the system for controlling one or more vehicle safety measures according to claim 13.

15. A computer program product comprising instructions, which, when executed on a computer, cause the computer to perform the method any one of claims 1 to 12.

**11**

Image(s)

Determine a height of the person

Determine a set of body characterstics — **12-1**

Compare the set of body characteristics with a corresponding set of reference characteristics — **12-2**

Determine the height based on the comparison — **12-3**

**12**

**13** Output a control signal based on the determined height

**Fig. 1**

**21**

**23**

**22**

**A**

**B**

**Fig. 2**

**Fig. 3A**

**Fig. 3B**

**Fig. 4**

Fig. 5

| Age [years] | Height [cm] | SH [cm] | Min TH [pixels] | Max TH [pixels] | Min SW [pixels] | Max SW [pixels] | ... | Airbag control |
|---|---|---|---|---|---|---|---|---|
| 2 | 87 | 52 | 237 | 274 | 168 | 187 | ... | No |
| 3 | 95 | 55 | 248 | 280 | 179 | 200 | ... | No |
| 4 | 103 | 58 | 255 | 296 | 191 | 215 | ... | No |
| 5 | 109 | 61 | 268 | 315 | 198 | 227 | ... | No |
| ... | ... | ... | ... | ... | ... | ... | ... | ... |
| 10 | 139 | 73 | 325 | 357 | 212 | 249 | ... | Reduced |
| ... | ... | ... | ... | ... | ... | ... | ... | ... |
| 14 | 164 | 86 | 387 | 445 | 240 | 288 | ... | Deploy |
| ... | ... | ... | ... | ... | ... | ... | ... | ... |

Fig. 6

**Fig. 7**

**Fig. 8**

**Fig. 9**

**Fig. 10**

Europäisches
Patentamt

European
Patent Office

Office européen
des brevets

# EUROPEAN SEARCH REPORT

Application Number

EP 23 17 4323

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 690 720 A1 (STRADVISION INC [KR]) 5 August 2020 (2020-08-05)<br><br>* abstract *<br>* figures 1-6 *<br>* paragraph [0001] *<br>* paragraph [0016] *<br>* paragraph [0043] – paragraph [0045] *<br>* paragraph [0059] – paragraph [0067] *<br>* paragraph [0070] – paragraph [0081] *<br>----- | 1-4, 7-10, 12-15 | INV.<br>G06V20/59<br>B60R21/015<br>G06V40/10<br>G06F18/2413<br>G06V10/25<br>G06V10/20<br>G06V10/26<br>G06F18/25<br>G06V10/80<br>B60R21/01 |
| X | US 2021/001796 A1 (KUDO DAIKI [JP] ET AL) 7 January 2021 (2021-01-07)<br>* figures 1-4, 5A, 5B, 8-10 *<br>* paragraph [0002] – paragraph [0008] *<br>* paragraph [0023] – paragraph [0027] *<br>* paragraph [0035] – paragraph [0036] *<br>* paragraph [0078] – paragraph [0096] *<br>----- | 1-9, 13-15 | |
| X | US 2022/144193 A1 (LI YUNTAO [US] ET AL) 12 May 2022 (2022-05-12)<br><br>* abstract *<br>* figures 2, 3A, 3B, 4A, 5 *<br>* paragraph [0035] – paragraph [0039] *<br>* paragraph [0047] – paragraph [0051] *<br>----- | 1-3, 7-11, 13-15 | **TECHNICAL FIELDS SEARCHED (IPC)**<br><br>G06V<br>B60R<br>G06F |
| X | US 2021/188205 A1 (ADUSUMALLI VENKATESWARA [US] ET AL) 24 June 2021 (2021-06-24)<br>* figures 1A, 1B, 8, 9, 12, 13 *<br>* paragraph [0060] – paragraph [0074] *<br>----- | 1-3,10, 11,13-15 | |

The present search report has been drawn up for all claims

| Place of search | Date of completion of the search | Examiner |
|---|---|---|
| The Hague | 6 December 2023 | Konya, Iuliu |

Europäisches
Patentamt

European
Patent Office

Office européen
des brevets

**Application Number**

**EP 23 17 4323**

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

**see sheet B**

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

```
1. claims: 1-10, 12-15

        how to combine the seat and person information to determine
        a set of body characteristics
                        ---


2. claim: 11

        how to model the uncertainty of the body characteristics
        mapping
                        ---
```

## ANNEX TO THE EUROPEAN SEARCH REPORT
## ON EUROPEAN PATENT APPLICATION NO.

EP 23 17 4323

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2023

| Patent document cited in search report | | | Publication date | Patent family member(s) | | | Publication date |
|---|---|---|---|---|---|---|---|
| EP | 3690720 | A1 | 05-08-2020 | CN | 111507174 | A | 07-08-2020 |
| | | | | EP | 3690720 | A1 | 05-08-2020 |
| | | | | JP | 6865366 | B2 | 28-04-2021 |
| | | | | JP | 2020123352 | A | 13-08-2020 |
| | | | | KR | 20200094651 | A | 07-08-2020 |
| | | | | US | 10643085 | B1 | 05-05-2020 |
| US | 2021001796 | A1 | 07-01-2021 | CN | 111867466 | A | 30-10-2020 |
| | | | | DE | 112018007120 | T5 | 05-11-2020 |
| | | | | JP | 6739672 | B2 | 12-08-2020 |
| | | | | JP | WO2019180876 | A1 | 30-04-2020 |
| | | | | US | 2021001796 | A1 | 07-01-2021 |
| | | | | WO | 2019180876 | A1 | 26-09-2019 |
| US | 2022144193 | A1 | 12-05-2022 | US | 11254270 | B1 | 22-02-2022 |
| | | | | US | 2022144193 | A1 | 12-05-2022 |
| US | 2021188205 | A1 | 24-06-2021 | CN | 113002469 | A | 22-06-2021 |
| | | | | DE | 102020215653 | A1 | 24-06-2021 |
| | | | | US | 2021188205 | A1 | 24-06-2021 |

EPO FORM P0459

For more details about this annex : see Official Journal of the European Patent Office, No. 12/82